# EUROPÄISCHE PATENTANMELDUNG

(11) **EP 0 689 336 A2**
(43) Veröffentlichungstag der Anmeldung: **27.12.1995**
(21) Anmeldenummer: 95890116.7
(22) Anmeldetag: 23.06.1995
(51) Int. Cl.: H04M 3/50, H04M 3/42

(54) **Fernsprechvermittlungsanlage mit Sprachspeichereinrichtung**

(30) Priorität: 23.06.1994 AT 1243/94
(71) Anmelder: Alcatel Austria Aktiengesellschaft, A-1210 Wien (AT)
(72) Erfinder: Eckhart, Wolfgang, A-1210 Wien (AT)
(74) Vertreter: Pohl, Herbert, Dipl.-Ing

(57) **Zusammenfassung**

Fernsprechvermittlungsanlage (1) mit einer Sprachspeichereinrichtung (7) sowie ein Verfahren zur Abspeicherung von Sprachnachrichten in einer solchen Vermittlungsanlage, wobei die Sprachspeichereinrichtung imstande ist, von einem rufenden Teilnehmer (2) eintreffende und für einen gerufenen Teilnehmer (3) bestimmte Sprachnachrichten zu speichern und nach Aufforderung durch den gerufenen Teilnehmer an diesen abzusenden. Es sind in der Steuereinrichtung (5) Mittel (13) vorgesehen, die die Nummer und /oder den Namen der Hinterleger (2) der Sprachnachrichten sowie deren Anzahl in einer Anrufertabelle speichern. Dem gerufenen Teilnehmer (3) wird diese Tabelle auf dessen Apparatedisplay (8) übertragen und angezeigt. Der gerufene Teilnehmer kann daraus auswählen in welcher Reihenfolge er die Sprachnachrichten abrufen möchte.

## Beschreibung

Die Erfindung betrifft eine Fernsprechvermittlungsanlage mit einer Sprachspeichereinrichtung, die imstande ist, von einem rufenden Teilnehmer eintreffende und für einen gerufenen Teilnehmer bestimmte Sprachnachrichten zu speichern und nach Aufforderung durch den gerufenen Teilnehmer an diesen abzusenden, wobei die Fernsprechvermittlungsanlage von einer Steuereinrichtung gesteuert wird, die Steuerprozesse zur Rufumleitung sowie zur Ansteuerung der gewünschten Mailbox in der Sprachspeichereinrichtung und einen Rufnummernspeicher zur Speicherung der Identifikationsmerkmale der rufenden Teilnehmer enthält und wobei die Teilnehmereinrichtung des gerufenen Teilnehmers ein Display aufweist. Die Erfindung betrifft auch ein Verfahren zur Abspeicherung von Sprachnachrichten in einer solchen Fernsprechvermittlungsanlage.

Telefonvermittlungsanlagen mit Sprachspeichereinrichtungen sind bereits bekannt und werden in der Fachsprache meist als Voicemail-Einrichtungen bezeichnet. Derartige Einrichtungen sind beispielsweise in der EP 0 087 849 und in der EP 0 336 524 sehr ausführlich beschrieben. Ein Verfahren und eine Anordnung zur Abspeicherung von Fernmeldenachrichten in einer Fernmeldenebenstellenanlage ist auch aus der EP 0 304 653 bekannt.

Die bekannten Einrichtungen haben den Nachteil, daß die gespeicherten Sprachnachrichten nur in der Reihenfolge ihrer Abspeicherung wieder abgerufen werden können. Dadurch ist beispielsweise keine Prioritätsreihung möglich.

Aus der EP 0 588 101 ist eine Sprachspeichereinrichtung bekannt, die für den Teilnehmer eine Prioritätenliste bereithält, in die der Teilnehmer jene Rufnummern einwählen kann, die bei Anwendung einer Reihe von Leistungsmerkmalen bevorzugt behandelt werden sollen. Wird also beispielsweise in der Sprachspeichereinrichtung eine Sprachnachricht in der Mailbox eines bestimmten Teilnehmers gespeichert, so wird die Rufnummer des rufenden Teilnehmers mit den gespeicherten Prioritäts-Rufnummern verglichen. Bei einer Übereinstimmung wird diese Sprachnachricht bevorzugt behandelt und erhält beim Abrufen der gespeicherten Nachrichten durch den gerufenen Teilnehmer eine Prioritätsstellung. Aus dieser Veröffentlichung ist auch eine Einrichtung bekannt, die der Rufnummer des rufenden Teilnehmers dessen Namen zuordnet und an das Display des gerufenen Teilnehmers sendet, wenn dieser dazu auffordert.

Die bekannten Einrichtungen haben den Nachteil, daß nur angezeigt werden kann, ob Nachrichten in der persönlichen Mailbox warten, es fehlt jedoch vorerst die Information, wieviele Nachrichten in der Mailbox warten, bzw. zu welchem Zeitpunkt diese Nachrichten aufgesprochen wurden. Weiters ist es dem gerufenen Teilnehmer nicht möglich beim Abrufen der Sprachnachrichten auf einfache Weise eine Reihung der Sprachnachrichten durchzuführen. Vielmehr muß der Teilnehmer die Sprachspeichereinrichtung rufen, und über bekannte Verfahren, z.B. durch Wählen von DTMF-Signalen über einen entsprechenden Apparat, diese Informationen abfragen bzw. im zeitraubenden Dialogverfahren mit der Sprachspeichereinrichtung die Abfragereihung durchführen.

Es ist Aufgabe der vorliegenden Erfindung, diesen Nachteil zu beseitigen, insbesondere ein Verfahren anzugeben, das es ermöglicht, die auf dem Display eines Teilnehmerapparates angezeigten Namen der Teilnehmer, die Nachrichten auf seiner Mailbox hinterlassen haben unmittelbar auszuwählen und eine Prioritätsreihung der Nachrichten durchzuführen, ohne vorerst die Mailbox zu rufen.

Die Erfindung löst diese Aufgabe dadurch, daß jedem an die Sprachspeichereinrichtung umgeleiteten gerufenen Teilnehmer im Rufnummernspeicher eine Anrufertabelle zugeordnet ist, die die Identifikationsmerkmale, beispielsweise die Teilnehmernummern oder die Namen, jener rufenden Teilnehmer auflistet, die in der Sprachspeichereinrichtung eine Sprachnachricht für den gerufenen Teilnehmer hinterlegt haben, daß die Steuereinrichtung Mittel enthält, die den Inhalt der Anrufertabelle an die Teilnehmerstation des gerufenen Teilnehmers senden und dort am Display anzeigen, und daß die Steuereinrichtung weiters Mittel enthält, die nach vorgegebener Anweisung des gerufenen Teilnehmers, beispielsweise durch Betätigung einer dazu vorgegebenen Taste, den gewünschten Teilnehmer aus der dem gerufenen Teilnehmer zugeordneten Tabelle auswählen.

So kann der Teilnehmer durch Tastendruck eine bestimmte Nachricht dieser Liste auswählen und durch einen weiteren Tastendruck diese Nachricht abrufen. Sowohl der Verbindungsaufbau mit der Voicemail, wie auch die Auswahl der entsprechenden Nachricht wird dann automatisch von der Nebenstellenanlage durchgeführt.

Eine Weiterbildung der Erfindung sieht vor, daß die Steuereinrichtung weiters Mittel enthält, die in der Anrufertabelle das Identifikationsmerkmal jenes Teilnehmers löschen, dessen Sprachnachricht bereits an den gerufenen Teilnehmer übertragen wurde. Auf diese Weise wird die Anrufertabelle im Rufnummernspeicher und damit auch auf dem Display des Teilnehmerapparates automatisch aktualisiert indem die Informationen über die abgerufenen Nachrichten gelöscht werden.

Entsprechend einer weiteren Ausgestaltung der Erfindung sind in jeder Anrufertabelle auch die Anzahl der in ihr aufgelisteten Identifikationsmerkmale abgespeichert. Auf diese Weise hat der Teilnehmer sofort einen Überblick über den Umfang der gespeicherten Voicemails.

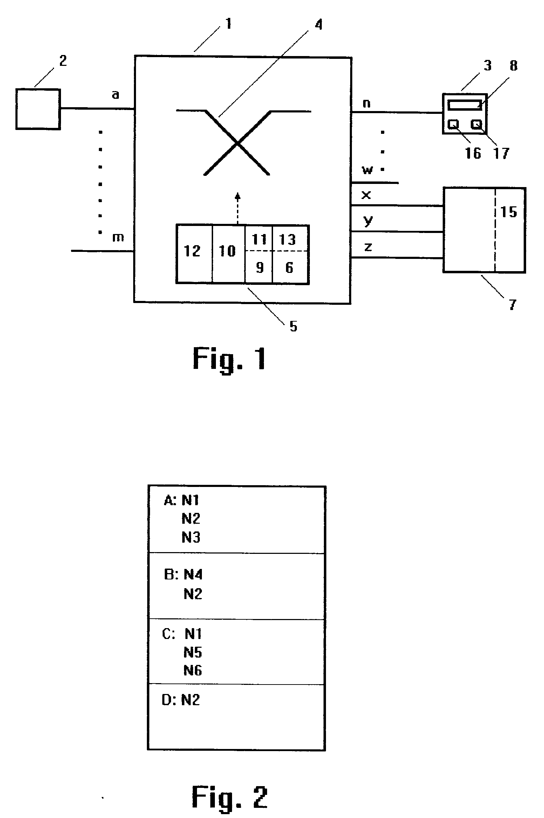

Die Erfindung wird nun anhand eines in der Zeichnung dargestellten Ausführungsbeispiels näher beschrieben. Fig. 1 zeigt das Prinzip einer bekannten Fernsprechnebenstellenanlage in der die erfindungsgemäße Einrichtung zusätzlich eingebaut ist, in Fig. 2 ist ein Beispiel für Anrufertabellen, die nach der Erfindung im Rufnummernspeicher abgespeichert sind, gezeigt.

Gemäß Fig. 1 sind an die Fernsprechvermittlungseinrichtung 1 über die Pforten a...z Teilnehmer-Endeinrichtungen angeschlossen. Im vorliegenden Beispiel sind die Pforten a...w für den Anschluß von Telefonapparaten 2, 3 vorgesehen und an die Pforten x,y und z ist eine Voicemail-Einrichtung 7 angeschlossen. Somit können in diesem Beispiel drei Belegungen der Voicemail-Einrichtung gleichzeitig stattfinden.

Die Vermittlungseinrichtung 1 enthält ein Koppelfeld 4, über das in bekannter Weise die Endeinrichtungen 2, 3 und 7 miteinander verbunden werden und das von einer Steuereinrichtung 5 gesteuert wird. Die Steuereinrichtung 5 enthält einen Speicher 6, in dem unter anderem ein Bereich als Rufnummernspeicher 13 reserviert ist, der für die Funktion der Voicemail-Anrufanzeige vorgesehen ist.

Weiters ist in der Steuereinrichtung 5 ein Steuerprozess 9 vorhanden, der zur Steuerung eines jeden Gesprächsablaufes gestartet wird, und ein Programm 11 enthält, das entsprechend der Betätigung der Auswahltasten des rufenden Teilnehmerapparates 2 den Gesprächsaufbau zur Voicemail-Einrichtung 7 herstellt, die Auswahl der entsprechenden Mailbox 15 in der Voicemail-Einrichtung 7 gewährleistet, und den Rufnummernspeicher 13 mit den Tabellen der Voicemail-Anrufanzeige verwaltet. Ein weiterer, im Hintergrund laufender Prozess 10 ist zuständig, um die Inhalte dieser Tabellen an die Displays 8 der Teilnehmerapparate 3 zu senden und regelmäßig die Displayanzeigen zu aktualisieren.

Der Teilnehmer 2 ruft nun zum Beispiel den Teilnehmer 3. Beim Abheben des Hörers wird durch das Steuerprogramm 5 ein Steuerprozess 9 gestartet, der nur für dieses Gespräch zuständig ist, und nach diesem wieder gestoppt wird. Pro Gespräch existiert also ein Steuerprozess 9. Der Teilnehmer 3 ist zur Zeit nicht gesprächsbereit und hat seinen Teilnehmeranschluß zur Voicemail-Einrichtung 7 umgeleitet. Diese Umleitung, die über die Steuereinrichtung 5 in bekannter Weise erfolgt, kann nach Ablauf einer Rufzeit auch automatisch erfolgen.

Ist nun der Ruf zu einer Voicemail-Einrichtung 7 umgeleitet, so erfolgt der für eine Voicemail-Einrichtung an sich bekannte Informationsaustausch, der vom Steuerprozess 9 gesteuert wird.

Der rufende Teilnehmer 2 wird über eine Pforte x,y oder z zur persönlichen Mailbox 15, in der Voicemail-Einrichtung 7 durchgeschaltet, und hat nun die Möglichkeit Nachrichten aufzusprechen.

Hat der Teilnehmer 2 eine Nachricht hinterlassen, so wird über den Steuerprozess 9 im Rufnummernspeicher 13 ein Eintrag eingefügt. Die maximale Anzahl der Einträge pro Teilnehmertabelle (A,B,C,D in Fig.2) kann vordefiniert werden. Ist die Tabelle länger, als auf dem Display 8 des Teilnehmerapparates 3 darstellbar, so kann per Tastendruck das Display "durchgeblättert" werden. Durch den sogenannten Backgroundprozess 10 wird nun das Display 8 des Teilnehmers 3 aktualisiert.

Somit steht auf dem Display 8 von Teilnehmer 3 beispielsweise folgende Information:

| **Teilnehmernummer** | **Name** | **Zeitpunkt d. Nachricht** | **Anzahl** |
|---|---|---|---|
| 3493 | Müller A. | 26.03.1995 , 10:30 | 1 |
| 2487 | Maier U. | 26.03.1995 , 11:10 | 2 |
| 2634 | Smith B. | 26.03.1995 , 12:45 | 3 |

Teilnehmer 3 kehrt nun zu seinem Teilnehmerapparat zurück und sieht daß eine Nachricht in seiner Mailbox 15 wartet. Sind meherere Einträge auf dem Display 8 vorhanden, so kann er mit einer Auswahltaste 16 auf seinem Apparat einen bestimmten Eintrag selektieren, und mit einer "Voicemailtaste" 17 diese Nachricht abrufen.

Drückt der Teilnehmer 3 eine dieser Tasten, so wird der Steuerprozess 9 gestartet, der anzeigt, welche Nachricht im Moment selektiert ist, bzw. der, wenn das Display nicht die gesamte gespeicherte Nachricht anzeigen kann, das Display durchblättert. Zeigt das Display eine Nachricht an, die der Teilnehmer 3 hören möchte, so drückt dieser die Voicemailtaste 17. Der Steuerprozess 9 ruft daraufhin eine freie Voicemailpforte x. Die Voicemail-Einrichrung 7 meldet sich auf der Voicemailpforte x. Der Steuerprozess 9 belegt ein DTMF-Register 12, mit dem die Auswahl der entsprechenden Mailbox 15 des Teilnehmers 3 und der entsprechenden Nachricht auf dieser Mailbox erfolgt.

Die Signalisierung zur Voicemail-Einrichtung 7 erfolgt genauso, als würde ein Teilnehmer per DTMF-Apparat mit den dafür vorgesehenen Tasten die Nachricht in an sich bekannter Weise auswählen. Der Steuerprozess 9 kann diese Auswahl deshalb durchführen, weil im Rufnummernspeicher 13 die Anzahl und die Reihenfolge der Nachrichten eingetragen ist.

Ist die entsprechende Mailbox 15 selektiert, so wird zum Teilnehmer 3 durchgeschaltet.

Nachdem die Nachricht empfangen wurde, kann der Teilnehmer 3 die Nachricht löschen. Dies wird üblicherweise durch eine Sprachdurchsage der Voicemail-Einrichtung 7 mitgeteilt. Drückt der Teilnehmer 3 eine Taste zum Löschen der Nachricht (meistens von der Voicemaileinrichtung vordefinierte Tasten 1 bis 9, * oder #), so wird die Nachricht in der Mailbox 15 gelöscht. Der Steuerprozess 9 löscht auch den zugehörigen Eintrag im Rufnummernspeicher 13 des Teilnehmers 3 und aktualisiert das Display 8 des Teilnehmers 3.

Legt der Teilnehmer 3 auf, so gibt der Steuerprozess 9 die Voicemailpforte x und das DTMF-Register 12 wieder frei. Der Steuerprozess 9 wird wieder gestoppt.

Die Anzahl und die Rufnummern der Teilnehmer, die für den gerufenen Teilnehmer 3 eine Nachricht in der Voicemail-Einrichtung 7 hinterlassen haben, werden im Rufnummernspeicher 13 gespeichert, und zwar in einer Anrufertabelle A,B,C oder D, wie sie in Fig.2 dargestellt ist.

Wie in Fig.2 gezeigt, enthält der Rufnummernspeicher 13 aus Fig.1 für jeden an die Voicemail-Einrichtung umgeleiteten Teilnehmer eine Anrufertabelle A, B, C, D in der die Rufnummern N1...N6 jener Teilnehmer, die eine Nachricht hinterlegt haben, abgespeichert sind. Hat die Vermittlungsanlage auch die Namen aller an ihr angeschlossenen Teilnehmer gespeichert, so können durch einen einfachen und an sich bekannten Umrechenprozeß in der Anrufertabelle die Namen der Teilnehmer aufgelistet sein. Im gezeigten Beispiel enthält die Anrufertabelle A drei Namen N1,N2,N3, die Tabelle B zwei Namen N4,N2, die Tabelle C drei Namen N1,N5,N6 und die Tabelle D einen Namen N2.

Ist nun der Teilnehmer 3 wieder sprechbereit und will er seine Voicemails abfragen, so kann er durch Betätigung einer vorbestimmten Taste seines Teilnehmerapparates die für ihn erstellte Anrufertabelle abrufen, d.h. am Display 8 wird sowohl die Anzahl der Einträge in der Tabelle als auch die Liste der Namen angezeigt. Auf die oben bereits beschriebene Weise kann der Teilnehmer aus seiner Liste A einen Namen, beispielsweise N2 auswählen und durch Drücken einer vorbestimmten Taste 17 dessen Nachricht aus der Voicemail-Einrichtung abrufen.

Nach erfolgter Abfrage wird der Eintrag N2 in der Tabelle A gelöscht und der Speicherplatz steht für neue Voicemail-Anrufe zur Verfügung.

## Patentansprüche

**1.** Fernsprechvermittlungsanlage (1) mit einer Sprachspeichereinrichtung (7), die imstande ist, von einem rufenden Teilnehmer (2) eintreffende und für einen gerufenen Teilnehmer (3) bestimmte Sprachnachrichten zu speichern und nach Aufforderung durch den gerufenen Teilnehmer an diesen abzusenden, wobei die Fernsprechvermittlungsanlage (1) von einer Steuereinrichtung (5) gesteuert wird, die Steuerprozesse (9) zur Rufumleitung sowie zur Ansteuerung der gewünschten Mailbox (15) in der Sprachspeichereinrichtung (7) und einen Rufnummernspeicher (13) zur Speicherung der Identifikationsmerkmale (N1,...N6) der rufenden Teilnehmer (2) enthält und wobei die Teilnehmereinrichtung (3) des gerufenen Teilnehmers ein Display (8) aufweist, **dadurch gekennzeichnet**,
- daß jedem an die Sprachspeichereinrichtung (7) umgeleiteten gerufenen Teilnehmer (3) im Rufnummernspeicher (13) eine Anrufertabelle (A, B, C, D) zugeordnet ist, die die Identifikationsmerkmale (N1,...N6), beispielsweise die Teilnehmernummern oder die Namen, jener rufenden Teilnehmer (2) auflistet, die in der Sprachspeichereinrichtung (7) eine Sprachnachricht für den gerufenen Teilnehmer (3) hinterlegt haben,
- daß die Steuereinrichtung (5) Mittel (10) enthält, die den Inhalt der Anrufertabelle (A, B, C, D) an die Teilnehmerstation (3) des gerufenen Teilnehmers senden und dort am Display (8) anzeigen,
- daß die Steuereinrichtung (5) weiters Mittel (11) enthält, die nach vorgegebener Anweisung des gerufenen Teilnehmers (3), beispielsweise durch Betätigung einer dazu vorgegebenen Taste (16), den gewünschten Teilnehmer (N1) aus der dem gerufenen Teilnehmer (3) zugeordneten Tabelle (A) auswählen.

**2,** Fernsprechvermittlungsanlage nach Anspruch 1, dadurch gekennzeichnet, daß die Steuereinrichtung (5) weiters Mittel (11) enthält, die in der Anrufertabelle (A, B, C, D) das Identifikationsmerkmal (N1,...N6) jenes Teilnehmers (2) löschen, dessen Sprachnachricht bereits an den gerufenen Teilnehmer (3) übertragen wurde.

**3.** Fernsprechvermittlungsanlage nach Anspruch 1 oder 2, dadurch gekennzeichnet, daß in jeder Anrufertabelle (A,...B) auch die Anzahl der in ihr aufgelisteten Identifikationsmerkmale (N1,..N6) abgespeichert ist.

**4.** Verfahren zur Abspeicherung von Sprachnachrichten in einer Fernsprechvermittlungsanlage nach Anspruch 1,2 oder 3, wobei die Steuereinrichtung (5) der Vermittlungsanlage (1) die rufenden Teilnehmer (2) mit der Sprachspeichereinrichtung (7) verbindet und wobei die von den rufenden Teilnehmern (2) eintreffenden und für einen gerufenen Teilnehmer (3) bestimmten Sprachnachrichten in der Sprachspeichereinrichtung (7) gespeichert werden und nach Aufforderung durch den gerufenen Teilnehmer an diesen abgesendet werden, gekennzeichnet durch folgende weitere Verfahrensschritte:
- Abspeicherung der Identifikationsmerkmale (N1...N6) jener rufenden Teilnehmer (2), die in der Sprachspeichereinrichtung (7) Nachrichten für den gerufenen Teilnehmer (3) hinterlegt haben, in einer dem gerufenen Teilnehmer (3) zugeordneten Anrufertabelle (A,...D),
- Übertragung dieser Anrufertabelle (A,...D) zur Teilnehmerstation (3) des gerufenen Teilnehmers und Anzeige auf dessen Display (8),
- Auswahl eines Anrufers (N1,...N6) aus der am Display angezeigten Anrufertabelle durch den gerufenen Teilnehmer (3) und Übertragung des Identifikationsmerkmals dieses ausgewählten Anrufers an den Steuerprozess (9),

**5.** Verfahren nach Anspruch 4, dadurch gekennzeichnet, daß beim Löschen einer Sprachnachricht in der Mailbox (15) auch das zugehörige Identifikationsmerkmal (N1...N3) in der Anrufertabelle (A,...D) gelöscht wird.
